# FASCICULE DE BREVET EUROPEEN

(11) **EP 2 073 204 B1**
(45) Date de publication et mention de la délivrance du brevet: **13.04.2011**
(21) Numéro de dépôt: 08291188.4
(22) Date de dépôt: 15.12.2008
(51) Int. Cl.: G11B 9/02

(54) **Support de stockage de données et procédé associé**
Datenträger zur Speicherung von Daten und entsprechendes Verfahren
Data storage medium and associated method

(30) Priorité: 21.12.2007 FR 0760297
(43) Date de publication de la demande: 24.06.2009
(73) Titulaire: Commissariat à l'Énergie Atomique et aux Énergies Alternatives, 75015 Paris (FR); S.O.I.Tec Silicon on Insulator Technologies, 38190 Bernin (FR)
(72) Inventeur: Deguet, Chrystel, 38330 Saint Ismier (FR); Clavelier, Laurent, 38000 Grenoble (FR); Fournel, Franck, 38190 Villard-Bonnot (FR); Moulet, Jean-Sébastien, 73000 Chambéry (FR)
(74) Mandataire: Quantin, Bruno Marie Henri

(56) Documents cités:
- WO-A-2005/045821
- FR-A- 2 862 802

## Description

La présente invention porte sur un support de stockage de données et un procédé associé.

Les couches de matériaux ferroélectriques peuvent être utilisées pour le stockage de données sur une surface. On sait en effet que les cristaux ferroélectriques ont un moment dipolaire électrique même en l'absence d'un champ électrique extérieur.

Un moyen pour créer un réseau d'éléments de stockage de données sur une couche de matériau ferroélectrique est de modifier localement les caractéristiques ferroélectriques du matériau. La direction du moment dipolaire peut être modifiée par l'application d'un champ électrostatique extérieur.

Une telle modification peut être obtenue par application locale d'un champ électrostatique entre une pointe de microscope à champ proche positionnée d'un côté de la couche et une contre-électrode plane située du côté opposé de la couche parallèlement à celle-ci.

Il a été montré par Cho *et al.* (Cho et al ; Nanotechnology, 17, 006, S137-S141) qu'un champ électrostatique de 10 V appliqué pendant 500 ps modifie la direction de polarisation d'un cristal ferroélectrique de 18 nm d'épaisseur monté sur une contre-électrode en chrome.

Les volumes de cristal ferroélectrique dont le caractère ferroélectrique est modifié sont appelés des nanodomaines. Le plus petit diamètre de nanodomaine (mesuré parallèlement à la couche) obtenu par Cho *et al.,* à titre expérimental, est de 5.1 nm. Ces auteurs ont également préparé des réseaux de nanodomaines sur une couche. Le plus petit pas obtenu à titre expérimental dans un réseau de nanodomaines est de 8.0 nm.

La polarisation de chaque nanodomaine constitue une information, typiquement une information binaire. De manière générale, plus la dimension des nanodomaines est faible, plus la densité des informations pouvant ainsi être stockées sur une couche ferroélectrique peut être élevée.

A titre d'exemple on peut calculer que, si la modification de propriétés ferroélectriques est faite avec une précision de l'ordre de 5 nm, on peut obtenir une mémoire de densité 10 Tbit par pouce carré (environ 6.5 cm²).

On sait que l'aire des nanodomaines débouchant sur la surface de la couche ferroélectrique est d'autant plus faible que l'épaisseur de la couche ferroélectrique est faible.

La technologie Smart cut™ (voir par exemple le document Us 5374564) peut être avantageusement utilisée pour l'obtention d'une couche ferroélectrique mince. On se référera par exemple au document US 6607969 qui décrit l'utilisation de couches ferroélectriques minces.

Des techniques de report impliquant des étapes de meulage et de polissage sont également utilisables. On pourra, à ce sujet, se référer à l'article de Cho *et al.* cité précédemment.

En pratique, les rayons de courbure des pointes de microscope à champ proche (par exemple un microscope à force atomique AFM) sont de l'ordre de 10 nm ou plus, ce qui constitue un facteur limitant important. Ces pointes sont conductrices, par exemple recouvertes de métal.

Il est à noter que suivant la méthode de microscopie à champ proche utilisée, la pointe de microscope à champ proche peut être ou non en contact avec la surface au moment de l'application du champ électrostatique.

Le fait d'approcher la pointe de la surface permet de réduire la taille des nanodomaines, avec toutefois un risque de dégradation de cette surface.

En tout état de cause, il est difficile pour le moment d'obtenir des nanodomaines de taille inférieure à 5 nm, notamment du fait de la taille des pointes de microscope.

Par ailleurs, il a été constaté que les procédés existants offrent un niveau de reproductibilité limité pour la formation des petits nanodomaines et la modification de leurs propriétés ferroélectriques.

En effet, deux pointes de microscope à champ proche ne sont jamais totalement identiques, et on constate que, d'une opération d'écriture avec une pointe donnée à une autre opération d'écriture avec une autre pointe, la taille et la géométrie des nanodomaines résultant varient.

L'invention a pour objet de permettre de manière fiable et reproductible, la création de nanodomaines de très petites tailles, en minimisant l'influence de la géométrie de la pointe d'écriture.

Pour résoudre ce problème, la présente invention propose un support de stockage de données comportant :
- une couche formant électrode éventuellement à la surface d'un susbstrat porteur,
- une couche en matériau sensible longeant ladite couche formant électrode, et dont le volume est adapté à être localement modifié entre deux états électriques sous l'action d'un champ électrique localisé,
- ce support admettant un plan de référence globalement parallèle à la couche en matériau sensible, destiné à être longé par au moins un élément d'application d'un champ électrostatique en combinaison avec la couche formant électrode,
- caractérisé en ce que ce support comporte, parallèlement à ce plan de référence, une pluralité de portions conductrices faisant partie de la couche formant électrode et séparées par au moins une zone électriquement isolante, ces portions électriquement conductrices ayant, dans au moins une direction parallèle au plan de référence, une dimension au plus égale à 100 nm, certaines au moins des portions conductrices étant électriquement connectées entre elles, ces portions conductrices définissant au sein de la couche en matériau sensible des emplacements d'écriture/lecture de données.

La couche formant électrode peut être le substrat lui-même, s'il est suffisamment conducteur.

On appréciera que la délimitation physique de portions conductrices dans la couche formant électrode, par utilisation d'un matériau électriquement isolant, permet de définir par avance, des zones d'écriture/lecture dans la couche en matériau sensible et donc de contrôler la géométrie des zones d'écriture/lecture, appelées nanodomaines, tout en minimisant l'influence de la géométrie de la pointe.

Préférentiellement ladite dimension est au plus égale à 50 nm.

Selon une caractéristique, chacune des portions conductrices de ladite pluralité est à une distance inférieure à 100 nm d'une portion conductrice voisine de ladite pluralité, mesurée parallèlement au plan de référence.

De préférence, cette distance inférieure à 100 nm est mesurée parallèlement à la dimension d'une portion conductrice inférieure à 100 nm.

Selon une caractéristique, la couche en matériau sensible comprend un matériau ferroélectrique.

Par exemple, le matériau ferroélectrique est du tantalate de lithium LiTaO₃. Ce peut être également du BaTiO₃, du SrTiO₃, du LaAlO₃ ou tout autre matériau ferroélectrique, même non monocristallin tel que le PZT (PbZr)TiO₃, le Bi₄Ti₃O₁₂ et le SrRuO₃.

Selon une caractéristique, le support comporte en outre une couche d'oxyde entre un substrat porteur et la couche formant électrode.

Selon un mode général de réalisation, la couche formant électrode est plane et la couche en matériau sensible est plane et continue.

Par exemple, lesdites portions conductrices comprennent des zones de croisement de lignes d'un premier ensemble de lignes parallèles les unes aux autres avec des lignes d'un deuxième ensemble de lignes conductrices parallèles les unes aux autres, les lignes du deuxième ensemble rencontrant transversalement les lignes du premier ensemble, ces lignes assurant la connexion des dites portions conductrices entre elles, les lignes du premier et du deuxième ensembles de lignes étant coplanaires.

Selon un mode de réalisation, les lignes des premiers et seconds ensembles sont formées dans des dislocations à une interface de collage entre deux structures en matériau monocristallin, selon au moins deux directions différentes, ces lignes assurant la connexion desdites portions conductrices entre elles.

Par exemple, les lignes conductrices définissent des mailles rectangulaires ou carrées.

Selon un mode de réalisation les portions conductrices comprennent des plots venant en saillie vers la couche sensible à partir d'une couche sous-jacente en matériau conducteur.

Cela permet de présenter à la couche en matériau sensible une portion conductrice ayant une circonférence de moins de 100 nm parallèlement au plan de référence, ce qui permet de réduire la surface des emplacements d'écriture/lecture de données, leur dimension dans chaque direction étant limitée par la taille des plots.

Par exemple, la couche sous-jacente comprend des lignes conductrices se croisant les unes avec les autres.

Selon un autre exemple, la couche sous-jacente est continue.

Selon un mode de réalisation, le plan de référence s'étend entre la couche en matériau sensible et une pluralité de lignes formant des électrodes situées à l'opposé de la couche formant électrode par rapport à cette couche en matériau sensible.

Egalement selon un mode de réalisation, la couche formant électrode et la couche en matériau sensible sont chacune formées de portions, chaque portion de la couche formant électrode étant située à l'une ou l'autre de deux profondeurs par rapport au plan de référence, et chaque portion de la couche en matériau sensible longeant une portion de la couche formant électrode, ladite couche formant électrode étant à la surface d'un substrat.

Par exemple, les portions de la couche formant électrode à une faible profondeur constituent des sommets de plots en saillie par rapport à des portions de la couche formant électrode à une deuxième profondeur.

Par exemple, les portions de la couche formant électrode à une faible profondeur constituent une surface d'une grille en saillie par rapport à des portions de la couche formant électrode à une deuxième profondeur.

L'invention propose également un procédé de fabrication d'un support de stockage de données selon lequel on forme sur une surface d'un substrat porteur une couche formant électrode et une couche en matériau sensible caractérisé en ce qu'on délimite par un matériau électriquement isolant une pluralité de portions conductrices dans la couche formant électrode.

Préférentiellement, on fabrique la couche formant électrode par une étape de collage de deux structures mono-cristallines en sorte de former à un interface de collage entre les deux structures mono-cristallines un entrecroisement de dislocations, ladite étape de collage étant suivie d'une étape de diffusion de matériau conducteur au travers de l'une desdites structures jusqu'à former des lignes conductrices dans lesdites dislocations. Un amincissement d'au moins une des deux structures aura lieu avantageusement, avant le dépôt du matériau conducteur ou après sa diffusion.

Par exemple, une première des deux structures mono-cristallines est constituée par la partie superficielle du substrat. Après réalisation de la couche formant électrode, on forme par dépôt la couche en matériau sensible.

Selon un mode de réalisation, on forme la couche formant électrode par dépôt d'une couche en matériau conducteur sur la couche en matériau sensible et qu'on délimite des portions conductrices dans ladite couche en matériau conducteur par des opérations de gravure et de dépôt d'au moins le matériau électriquement isolant, et on relie ensuite par exemple par collage moléculaire la couche formant électrode à un substrat porteur.

Selon une caractéristique, on réalise des portions de connexion connectant lesdites portions conductrices au sein de ladite couche en matériau conducteur.

Selon une autre caractéristique, on réalise les portions conductrices sous forme de plots de matériel conducteur isolés par gravure de ladite couche en matériau conducteur, dite première couche conductrice, et qu'on dépose sur les plots une deuxième couche conductrice assurant la connexion entre lesdits plots de matériel conducteur.

Par exemple, la deuxième couche conductrice est continue.

L'invention va maintenant être décrite de manière détaillée, en référence aux dessins annexés, sur lesquels
- la figure 1 représente un support de stockage de données selon l'art antérieur, ainsi qu'une étape d'écriture d'un nanodomaine par approche d'une pointe de microscope à champ proche et application d'un champ électrostatique, .
- la figure 2 présente un support de stockage de données selon un premier mode de réalisation de l'invention, vu en coupe,
- la figure 3 présente une électrode du support de stockage de la figure 2, constituée de lignes conductrices parallèles, vue de dessus
- les figures 4A à 4C présentent schématiquement des formes de l'électrode métallique du support de stockage de données de la figure 2, vue de dessus, l'électrode comprenant un treillis de lignes conductrices à angles droits,
- les figures 5A et 5B présentent des formes de l'électrode du support de données de la figure 2, vue de dessus, l'électrode comprenant une ligne incurvée, ici en spirale
- les figures 6A à 6D présentent des étapes successives d'un exemple de procédé de fabrication d'un support de stockage tel que représenté en figures 2, 3, 4 ou 5
- la figure 7 représente un support de stockage de données selon un deuxième mode de réalisation de l'invention, vu en coupe
- les figures 8A et 8B présentent schématiquement deux variantes de la forme de l'électrode métallique du support de stockage de données de la figure 4, vue de dessus,
- les figures 9A à 9E présentent des étapes successives d'un exemple de procédé de fabrication d'un support de stockage tel que représenté en figures 7, 8A ou 8B,
- la figure 10 présente un support de stockage de données selon un troisième mode de réalisation de l'invention, vu en coupe,
- les figures 11A et 11B présentent schématiquement la forme de l'électrode métallique du support de stockage de données de la figure 10, vue de dessus,
- les figures 12A à 12D présentent des étapes successives d'un procédé de fabrication d'un support de stockage tel que représenté en figures 10, 11A, 11B,
- les figures 13A et 13B présentent chacune un support de stockage de données selon un quatrième mode de réalisation de l'invention, selon deux variantes, vu en coupe
- les figures 14A, 14B et 14C présentent un support de stockage de données selon un cinquième mode de réalisation de l'invention, vu en coupe selon deux directions perpendiculaires, puis vu du dessus.

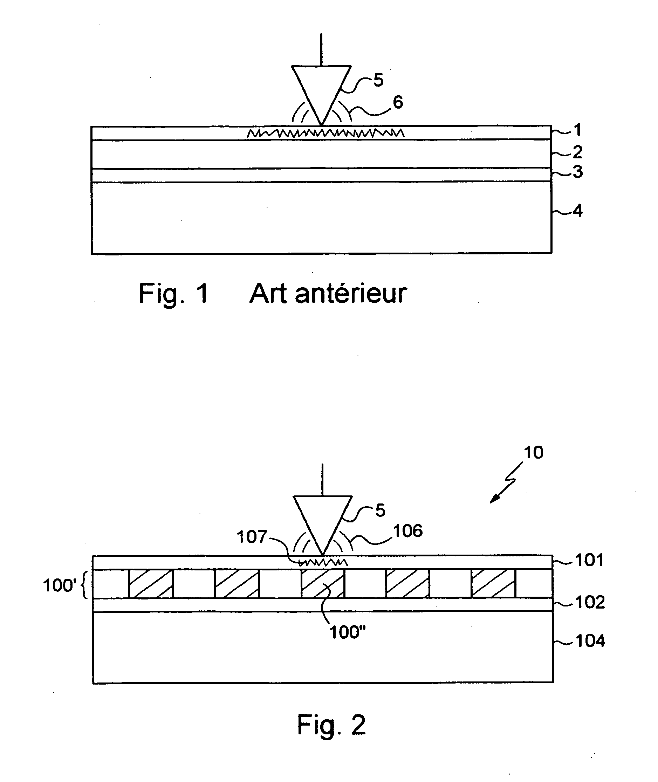

En référence à la figure 1, un support de stockage de données suivant l'art antérieur est présenté.

Le support de stockage de données comporte une couche ferroélectrique 1, par exemple de cristal de tantalate de lithium (LiTaO₃) déposée sur une couche électriquement conductrice continue 2 qui peut être métallique, par exemple en platine.

La couche électriquement continue 2 est située sur un substrat 4. Une couche d'oxyde 3 intercalaire peut faciliter le collage du métal sur le substrat.

Une pointe de microscope à champ proche 5 est approchée du support de stockage de données, en regard de la couche ferroélectrique 1, perpendiculairement à la couche ferroélectrique, et à distance des bords du support de stockage, notamment des bords de la couche métallique 2.

Dans les deux directions de son plan, la couche métallique 2 possède donc des dimensions plus grandes que la dimension transversale de la pointe de microscope à champ proche 5 d'au moins un ordre de grandeur. Cette couche peut même s'étendre sur toute l'étendue du support de stockage.

Un champ électrique est formé entre la pointe de microscope à champ proche 5 et la couche métallique 2.

Les lignes de champ 6 qui se forment entre la pointe de microscope à champ proche 5 et la couche métallique 2 ne sont pas influencées par les bords de la couche métallique (situées à une grande distance, voir ci-dessus) et sont les mêmes que celles qui se formeraient si la couche métallique était de dimension infinie dans son plan.

Le champ électrique ainsi formé provoque une modification de polarisation dans une zone 7 de la couche ferroélectrique 1 présente sous la pointe de microscope 5.

La zone 7 de polarité particulière ainsi formée est appelée un nanodomaine.

Selon maintenant un premier mode de réalisation de l'invention, un support de stockage de données 10 est présenté en référence à la figure 2 selon une vue de coupe.

Le support de stockage de données 10 comprend une structure électriquement conductrice, par exemple métallique, constituant une électrode 100'.

L'électrode 100' contient du platine Pt, ou selon une variante, un métal qui peut être choisi parmi les métaux Cr, Ru, Ni, Al, Au, Fe, Ti, W. Elle peut aussi comprendre un alliage ou de l'oxyde d'indium-étain ITO.

L'électrode 100' s'étend suivant un plan perpendiculaire au plan de la vue de la figure 2, et elle a une épaisseur typique de 25 nm perpendiculairement à son plan, mais cette épaisseur n'est pas limitée. Elle peut donc atteindre plusieurs microns voire plusieurs dizaines de microns.

Dans le plan de la figure 2, l'électrode comporte de part en part des zones métalliques 100", et un matériau isolant, ici de la silice SiO₂.

Dans le mode de réalisation représenté, les zones métalliques sont espacées, dans le plan de coupe, de manière sensiblement régulière, mais selon une variante, elles sont espacées de manière variable.

Une couche en matériau ferroélectrique, ici par exemple une couche 101 de tantalate de lithium LiTaO₃ est située sur la couche formant électrode. Elle recouvre à la fois les zones métalliques 100" et le matériau isolant SiO₂.

Selon une variante, le matériau ferroélectrique utilisé est du BaTiO₃, du SrTiO₃, du LaAlO₃ ou tout autre matériau ferroélectrique, même non monocristallin tel que le PZT (PbZr)TiO₃, le Bi₄Ti₃O₁₂ et le SrRuO₃.

La couche 100' formant électrode est elle-même située sur un substrat hôte 104, ici en silicium, par l'intermédiaire d'une couche d'oxyde 102.

Selon une variante, le substrat hôte 104 peut être en carbure de silicium SiC, en saphir ou en germanium Ge, par exemple:

Il est résulte que la couche formant électrode est enterrée au sein du support de stockage de données 10, ne débouchant pas sur les surfaces libres de celui-ci.

Dans la configuration représentée en figure 2, une pointe de microscope à champ proche 5 conductrice est approchée du support de stockage de données 10, en regard de la couche ferroélectrique 101.

La pointe de microscope 5 a un rayon de courbure inférieur à 100 nm, typiquement entre 10 et 20 nm.

Elle est approchée de la couche ferroélectrique 101 de telle sorte que la pointe 5 se trouve sur une droite perpendiculaire au plan de la couche ferroélectrique 101 (ou de l'électrode 100') plus ou moins centrée sur une zone conductrice 100".

La pointe de microscope va au contact de la surface de la couche ferroélectrique 101.

Selon une variante, la pointe 5 est positionnée à quelques nm de la couche 101, en regard de la zone conductrice 100", le microscope fonctionnant en mode résonnant (mode AFM tapping en anglais).

Un champ électrique est alors appliqué entre la couche formant électrode 100' et la pointe de microscope à champ proche 5 ; les lignes de champ 106 traversent une partie de la couche ferroélectrique 101.

Quand un tel champ électrique est appliqué entre la pointe de microscope à champ proche 5 conductrice et l'électrode constituée par la couche métallique enterrée 100', les lignes de champ 106 se forment entre la pointe de microscope et la zone conductrice 100", qui sont deux éléments dont les dimensions des parties se faisant face sont du même ordre de grandeur.

Ainsi les lignes du champ électrostatique sont formées dans un volume plus faible qu'avec les dispositifs selon l'art antérieur. Les lignes de champ sont focalisées, et s'écartent peu de l'espace situé entre la pointe de microscope à champ proche 5 et la zone conductrice 100" lui faisant face.

Il en résulte qu'il se forme un nanodomaine 107 sur la couche ferroélectrique 101, mais que ce nanodomaine est d'une plus petite taille (mesurée dans le plan de coupe de la figure) qu'avec les dispositifs selon l'art antérieur, cette taille pouvant dépendre de la largeur (dans le plan de coupe de la figure) de la zone conductrice 100" ou du rayon de courbure de la pointe selon les dimensions respectives de ces deux éléments. Quoiqu'il en soit, la taille maximale du nanodomaine sera fonction de la largeur de la zone conductrice 100".

Le support admet un plan de référence globalement parallèle à la couche en matériau sensible, destiné à être longé par la pointe 5.

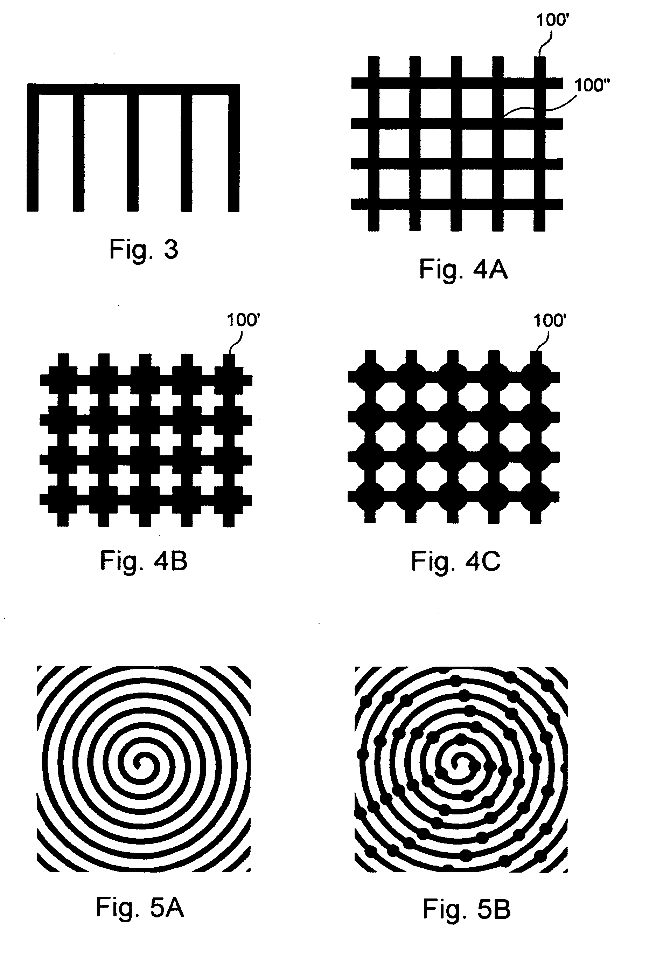

Les figures 3, 4A à 4C, ainsi que 5A et 5B présentent une vue de dessus de l'électrode du dispositif, selon différentes variantes.

Selon une première variante, représentée en figure 3, l'électrode est constituée de bandes parallèles les unes aux autres, et reliées électriquement les unes aux autres par une bande transversale unique. Cette bande unique transversale peut être dans le même plan que les bandes parallèles ou dans un plan décalé, auquel cas elle est néanmoins au contact avec les bandes parallèles. De manière générale, les bandes parallèles peuvent être électriquement reliées d'une manière quelconque les unes aux autres.

Les bandes ont des largeurs identiques, par exemple de 50 nm. Alternativement, les bandes sont de largeur variable, mais de manière générale, leur largeur est inférieure à 100 nm.

Selon une deuxième variante, représentée en figure 4A, l'électrode est sous la forme d'un treillis constitué, dans son plan, de deux séries de bandes conductrices.

Les bandes d'une série donnée sont sensiblement parallèles entre elles, et les deux séries de bandes sont sensiblement perpendiculaires l'une à l'autre.

Dans le mode de réalisation présenté, les bandes des deux séries ont des largeurs identiques par exemple de 50 nm. Alternativement, les bandes sont de largeur variable, entre les deux séries, et au sein d'une même série. Mais de manière générale, la largeur des bandes est inférieure à 100 nm.

Chaque intersection de deux bandes définit une zone de stockage 100", toutes les zones de stockage 100" étant électriquement connectées entre elles par les bandes conductrices.

Selon une troisième variante, représentée en figure 4B, l'électrode est constituée d'un treillis, des fragments métalliques larges de forme rectangulaire, voire carrée, étant présents au niveau des intersections.

L'insertion de zones conductrices larges au niveau des intersections des bandes conductrices permet la formation de nanodomaines ayant alors la forme de la zone large, et ce de manière contrôlée.

Selon une quatrième variante, représentée en figure 4C, l'électrode est également constitué d'un treillis, des fragments métalliques larges de forme cylindrique étant présents au niveau des intersections.

Selon une cinquième variante, représentée en figure 5A, l'électrode présente une piste métallique en forme de spirale et de largeur constante. La largeur pourrait bien entendu être variable le long de la spire.

Selon une sixième variante, représentée en figure 5B, l'électrode présente une piste métallique en forme de spirale avec, de place en place, des excroissances qui définissent des zones de stockage.

Les zones d'écriture ont au moins une dimension dans le plan inférieure à 100 nm.

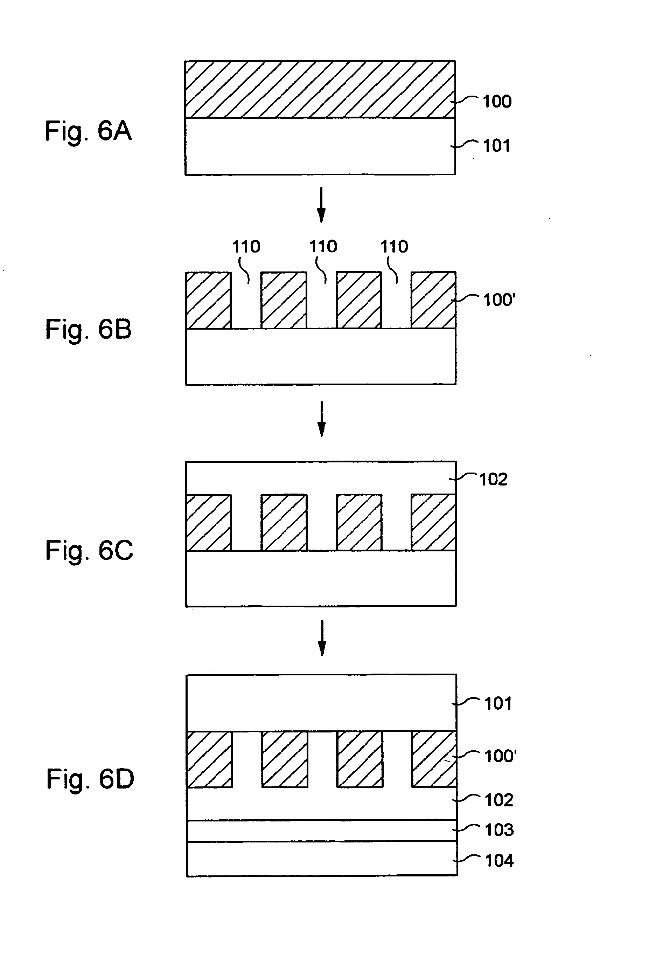

Les figures 6A à 6D présentent un mode de réalisation d'un procédé de fabrication d'un support de stockage tel que présenté en figures 2 et 3A à 3C et 5A ou 5B, constituant un premier mode de réalisation d'un procédé selon l'invention.

Une couche métallique 100 originellement continue (réalisée ici en platine Pt) est déposée à la surface d'un substrat en matériau ferroélectrique 101 (figure 6A).

On forme ensuite des trous 110 dans cette couche métallique 100 par exemple par lithographie à faisceau d'électrons.

On utilise par exemple au cours de cette étape un masque de lithographie en résine au travers duquel on réalise par gravure des trous séparés par des lignes constituant l'électrode 100'.

La couche ferroélectrique sert de couche d'arrêt lors de la gravure sélective de la couche métallique 100.

En référence à la figure 6C, on dépose ensuite un matériau non conducteur dans les trous 110 et sur les zones métalliques conservées. Le matériau non conducteur utilisé est, dans le mode de réalisation présenté, un oxyde 102.

Une étape de planarisation de l'oxyde 102, peut ensuite être effectuée.

Dans une dernière étape, en référence à la figure 6D, l'ensemble constitué de la couche ferroélectrique 101, de la couche métallique 100, et de l'oxyde 102 est collé par collage moléculaire sur un substrat 104.

Selon une variante, une couche d'oxyde 103 peut être intercalée entre le substrat 104 et l'ensemble constitué de la couche ferroélectrique 101, de la couche métallique 100, et de l'oxyde 102.

Par ailleurs, le collage moléculaire peut être remplacé par un collage utilisant une colle de tout type connu et approprié, par exemple une colle organique.

Le substrat 101 en matériau ferroélectrique est ensuite aminci par rodage et/ou CMP (polissage mécano-chimique), techniques pouvant être associées ou non à des traitements thermiques.

Selon une variante, l'amincissement peut être réalisé à partir d'un procédé de fracture au niveau d'une zone fragile enterrée créée par exemple par une implantation comme décrit dans le document US 6 607 969. L'implantation peut avoir été réalisée avant ou après le dépôt de la couche métallique.

Selon une variante du procédé de fabrication; la couche constituant l'électrode peut être fabriquée par d'autres techniques de lithographie : lift off, nano-impression (« nano-imprint. » en anglais), FIB, lithographie optique ou autre.

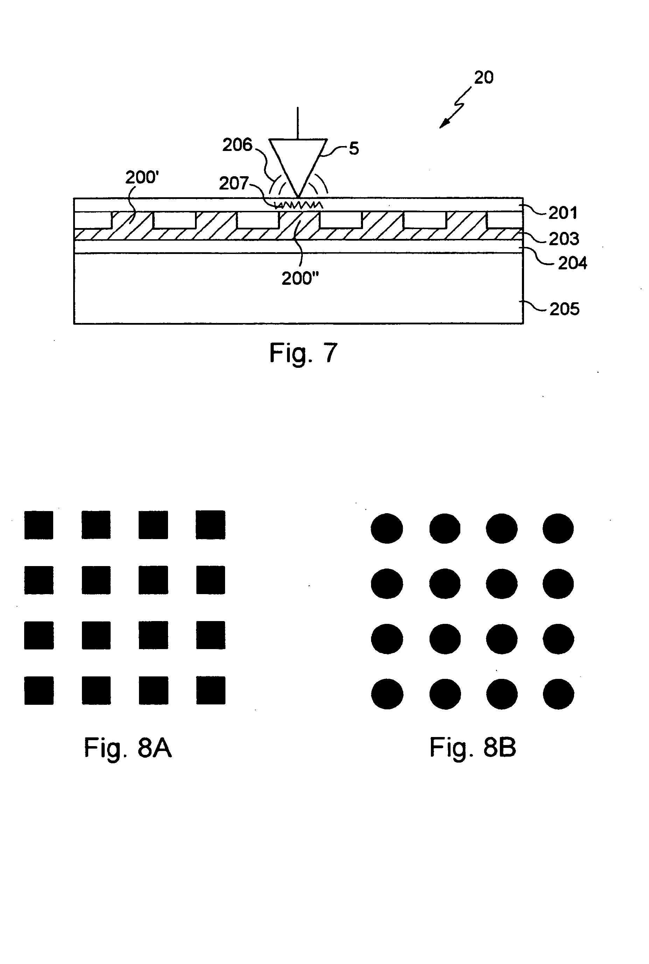

Selon maintenant un deuxième mode de réalisation de l'invention, un support de stockage de données est présenté aux figures 7 et 8A - 8B, respectivement une vue de coupe et une vue de dessus.

Un tel support de stockage de données 20 comprend une électrode comprenant des plots 200' et une couche métallique 203 par rapport à laquelle les plots sont en saillie.

Les figures 8A et 8B illustrent des exemples possibles de forme et d'agencement de ces saillies 200'. A la figure 8A, les saillies sont des cylindres à base circulaire, tandis qu'à la figure 8B, les saillies sont des plots parallélépipédique.

Le support de stockage de données 20 comprend également une couche ferroélectrique 201, posée sur l'électrode, elle-même posée sur un substrat 205 (qui peut être par exemple en silicium), éventuellement par l'intermédiaire d'une couche d'oxyde 204.

Comme précédemment avec d'autres supports de stockage de données, une pointe de microscope à champ proche 5 est positionnée au-dessus du support de stockage de données.

L'électrode présente, en regard de cette pointe de microscope, une zone conductrice 200" de dimension maximale dans le plan de la couche métallique inférieure à 100 nm.

Dans le mode de réalisation décrit, la zone conductrice 200" a la forme d'un plot, et son diamètre est inférieur à 100 nm.

Quand un champ électrique est appliqué entre la pointe de microscope à champ proche et l'électrode, les lignes de champ 206 se forment entre la pointe de microscope et l'excroissance de la zone conductrice 200".

La hauteur des plots est ici de 50 nm, et est comprise, selon des variantes, entre 10 et 100 nm. L'épaisseur de la couché continue 203 est quant à elle par exemple de 50 nm. Cette épaisseur n'est pas limitative, la couche continue pouvant être beaucoup plus épaisse : il peut s'agir du substrat 205 lui-même si celui-ci est suffisamment conducteur, par exemple s'il est en métal ou en silicium dégénéré.

Ainsi les lignes du champ électrostatique sont formées dans un volume restreint : elles sont focalisées, et s'écartent peu de l'espace situé entre la pointe de microscope à champ proche 5 et la zone conductrice 200" lui faisant face.

Il en résulte qu'il se forme un nanodomaine 207 sur la couche ferroélectrique 201, et que ce nanodomaine est de petite taille : sa taille maximale dépend de la largeur de la zone conductrice 200".

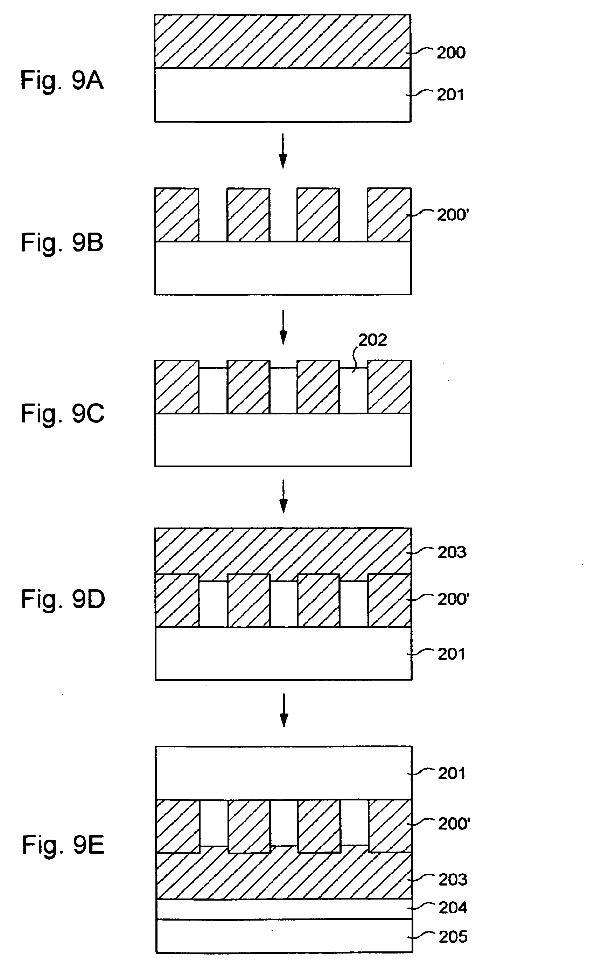

Les figures 9A à 9E représentent un mode de réalisation d'un procédé de fabrication d'un support tel que présenté aux figures 7 et 8A-8B, constituant un deuxième mode de réalisation d'un procédé selon l'invention.

En figure 9A, une couche métallique 200 continue en chrome Cr est déposée à la surface d'une couche ferroélectrique 201 de tantalate de lithium LiTaO₃. Selon une variante, d'autres métaux sont utilisés à la place du chrome, et d'autres matériaux ferroélectriques sont utilisés à la place du tantalate de lithium.

Par un procédé de lithographie analogue à celui précédemment décrit en relation à la figure 6B, la couche métallique 200 est évidée de telle sorte que subsistent des plots métalliques 200' séparés les uns des autres.

On utilise pour cela un masque de résine, au travers duquel on creuse la couche tout autour des plots. Une structure telle que représentée en figure 9B est obtenue.

Le procédé est ensuite poursuivi par le dépôt d'un matériau isolant 202 entre les plots 200'. Ce matériau peut être un oxyde, par exemple de l'oxyde de silicium, ou un nitrure.

Selon une variante, le matériau 202 recouvre entièrement les plots de telle sorte que ceux-ci sont entièrement enterrés. Le procédé se poursuit alors, par une étape (non représentée) de planarisation du matériau isolant, qui est menée de manière à laisser, à son achèvement, les plots métalliques débouchant à la surface libre du dispositif formé par la couche ferroélectrique, la couche métallique et l'oxyde.

Selon un mode de réalisation représenté en figure 9C, l'oxyde de silicium 202 est déposé, avant d'enlever le masque ayant servi à graver les plots, presque jusqu'au sommet des plots et ne recouvre qu'une partie de leur hauteur. Ainsi le niveau de la surface de la couche d'oxyde est directement inférieur au niveau de la surface des plots 200'. Le masque peut alors être enlevé.

Une étape ultérieure, représentée en figure 9D, comprend le dépôt d'une couche métallique 203 sur les plots de métal, de telle sorte que chaque plots 200' est en contact avec la couche métallique 203, de manière à assurer une continuité de matière électriquement conductrice d'un plot à l'autre formant ainsi une électrode.

Le matériau de cette couche 203 est le même que celui de la couche 200, ou alternativement il peut être un autre matériau conducteur, comme ceux indiqués précédemment.

Le procédé est ensuite complété, en référence à la figure 9E, par le collage de la couche métallique 203 sur un substrat 205, par exemple en silicium, éventuellement par l'intermédiaire d'une couche d'oxyde 204.

On procède ensuite à l'amincissement du substrat ferroélectrique 201, comme décrit en relation avec le premier mode de réalisation d'un procédé selon l'invention.

Selon un troisième mode de réalisation d'un support de stockage de données, représenté à la figure 7, on utilise un support de stockage de données 30 incluant une interface nanostructurée comme décrit dans les documents WO 99/05711 et WO 0 229 876.

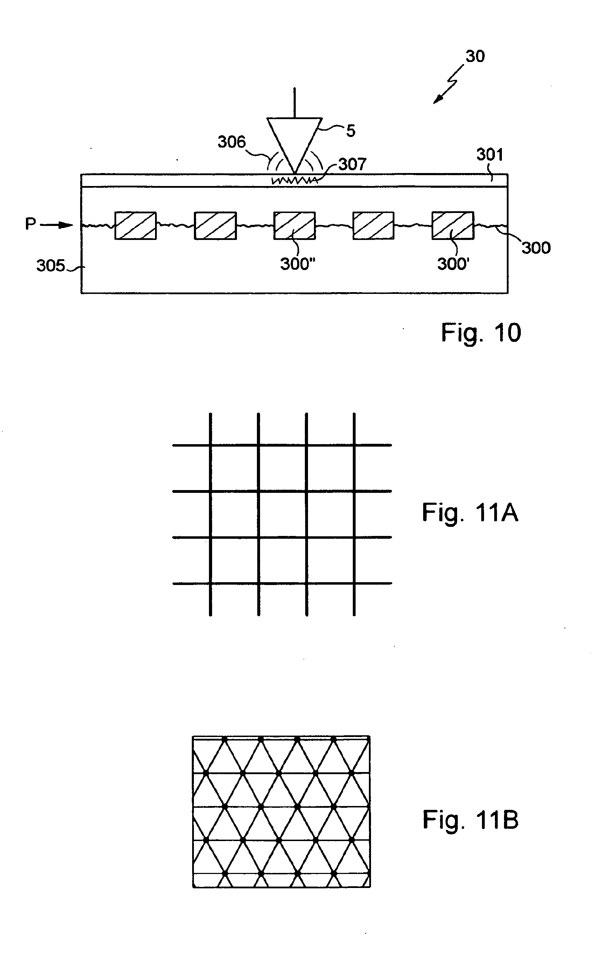

La figure 10 présente une vue de coupe d'un tel support de stockage, et les figures 11A et 11B présentent des vues de dessus de l'électrode pour deux variantes d'un tel support de stockage.

En référence à la figure 10 un support 305 en silicium comporte, globalement suivant un plan P, un réseau de dislocations 300.

Des lignes métalliques conductrices sont formées par dépôt, diffusion et agglomération d'un matériau conducteur (par exemple de métal) dans les dislocations. Le réseau de dislocations peut être carré, auquel cas les lignes métalliques dans les dislocations forment un réseau carré comme représenté en figure 11A. Alternativement, le réseau peut être rectangulaire ou triangulaire, comme représenté en figure 11B.

Aux intersections des lignes métalliques se trouvent des zones métalliques servant de zones de stockage d'information.

Dans le mode de réalisation présenté en figure 11A, la densité métallique au niveau de ces intersections est sensiblement identique à la densité métallique au niveau des lignes métalliques à distance des intersections.

Alternativement, la densité aux intersections peut être plus élevée qu'au niveau des lignes métalliques, du fait d'une plus grande agglomération de métal, comme représenté en figure 10 et en figure 11B.

La couche nanostructurée est enfouie à 10 nm de profondeur par rapport à la surface du support 305. Selon des variantes, elle est enfouie entre 3 et 50 nm de profondeur.

Sur la surface du support 305 est située une couche 301 en matériau ferroélectrique, ici du tantalate de lithium. La distance entre la couche nanostructurée et la couche 301 est donc ici de 10 nm.

Comme précédemment une pointe de microscope à champ proche 5 est positionnée au-dessus ou au contact du support de stockage de données.

L'ensemble constitué du métal des lignes métalliques formées dans les dislocations 300 constitue une électrode qui présente, en regard de cette pointe de microscope, une zone conductrice 300" à l'intersection de deux dislocations.

Cette zone conductrice 300" a une dimension inférieure à 10 nm.

Quand un champ électrique est appliqué entre la pointe de microscope à champ proche et l'électrode, les lignes de champ 306 se forment entre la pointe de microscope et la zone conductrice 300".

Ainsi les lignes du champ électrostatique sont formées dans un volume restreint : elles sont focalisées, et s'écartent peu de l'espace situé entre la pointe de microscope à champ proche 5 et la zone conductrice 300" lui faisant face.

Il en résulte qu'il se forme un nanodomaine 307 sur la couche ferroélectrique 301, et que ce nanodomaine est de très petite taille, typiquement inférieure à 10 nm.

On comprend que la taille du nanodomaine dépend de la largeur de la zone conductrice 300".

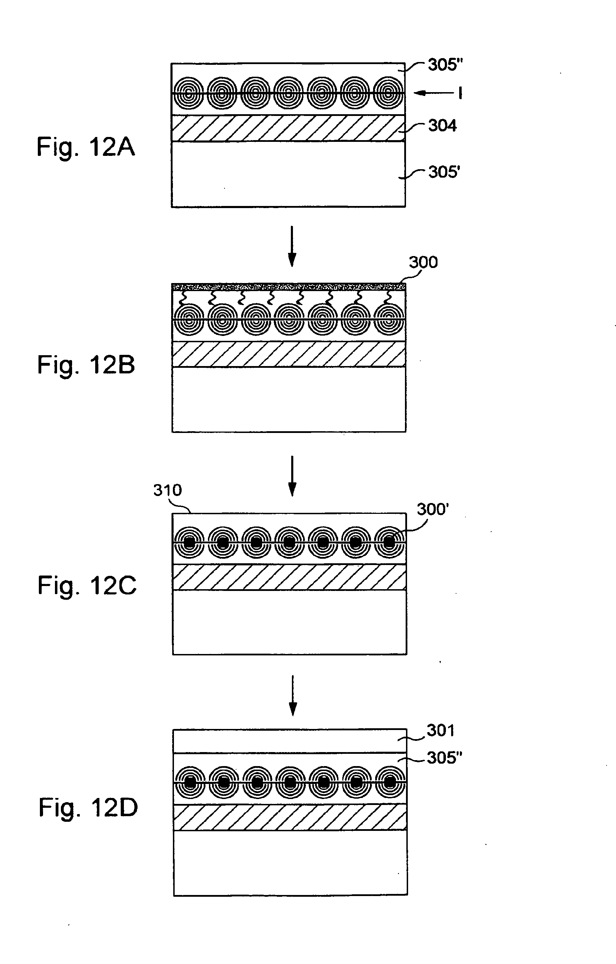

Les figures 12A à 12D présentent un procédé de fabrication d'un tel support de stockage de données 30.

En figure 12A, deux structures monocristallines 305' et 305" (par exemple du silicium) sont accolées l'une à l'autre suivant deux faces formant une interface I. La structure 305' est, par exemple une structure plus épaisse que la structure 305", par exemple quatre fois plus épaisse que la structure 305". D'autres rapports d'épaisseur sont évidemment possibles.

L'une des structures, ici la structure 305', contient une couche d'oxyde 304 qui la divise en deux blocs cristallins distincts.

Selon une variante (non représentée), la structure 305' ne contient pas de couche d'oxyde et est constitué d'un seul bloc cristallin.

Les deux structures 305' et 305" sont assemblées par collage moléculaire l'une par rapport à l'autre de telle sorte que les réseaux cristallins présentés par les faces en regard ont au moins un paramètre de désaccord, comme expliqué dans les documents WO 99/05711 et WO 02/29876.

Il en résulte qu'est présent, le long de l'interface I, un réseau de dislocations, appelée nanostructuration, dû au désaccord entre les réseaux cristallins des deux faces constituant l'interface.

En fonction des désorientations cristallines et/ou des désaccords de mailles cristallines des structures 305' et 305", la nanostructuration conduit à des dislocations arrangées suivant un réseau qui peut être rectangulaire, carré ou triangulaire et dont les caractéristiques géométriques (par exemple le pas) peuvent être choisies.

Une des structures, ici la structure 305", est ensuite amincie pour ajuster la profondeur du réseau de dislocation vis-à-vis de la surface libre de la structure 305". Cet amincissement pourrait en variante avoir lieu après la formation du nanogrillage décrit ci-dessous.

En référence à la figure 12B, on dépose du métal 300 à la surface libre de la structure 305".

Le métal 300 migre ensuite par diffusion thermique dans les dislocations qui constituent pour le métal des zones de ségrégation privilégiées. Dans le mode de réalisation décrit, le métal déposé est de l'or Au et la température de diffusion est de 500°C, appliquée pendant 1 min.

Le métal forme ainsi un nanogrillage dans les tranchées de la nanostructuration.

En variante, dans un mode de réalisation où la structure 305' ne comporte pas de couche d'oxyde, la couche métallique 300 est déposée sur la face libre de la structure 305'.

Le métal migre ensuite dans la structure 305', jusqu'aux dislocations, la température appliquée étant de 500°C, et la durée de migration étant de 15 h. La surface libre de 305" est maintenue exempte de dépôt.

Selon une variante, on utilise un dépôt de cuivre sur la surface libre de la structure de 305", et une durée de migration de deux jours à température ambiante.

Selon une autre variante, on dépose également du cuivre sur la surface libre de 305", le cuivre migrant pendant 5 min à une température de 200°C.

Selon encore une autre variante, on dépose du cuivre sur la surface libre de 305', et le cuivre migre pendant 2 h à 200°C.

Un avantage de cette méthode est d'avoir une fabrication collective de la grille métallique, avec un pas contrôlable, par exemple entre 10 et 100 nm, en choisissant la valeur du désaccord cristallin comme décrit dans les documents WO 99/05711 et WO 02/29876.

Par exemple dans le cas d'une désorientation en rotation de 0.44 °, on obtient un pas de 50 nm.

Les zones métalliques obtenues sont de petite taille car le métal s'étale seulement de 1 à 3 nm environ autour des dislocations.

En référence à la figure 12C, le surplus de métal est enlevé si besoin, de manière à obtenir une surface propre à la surface libre de 305".

On note qu'ainsi l'électrode n'affleure pas à la surface 310 de la structure, laissant donc à la surface du silicium une surface parfaitement plane, compatible avec un collage moléculaire.

Une étape d'amincissement (non représentée) peut être effectuée à ce stade pour ajuster, si besoin est, la profondeur de l'électrode vis-à-vis de la surface libre de la structure 305' ou de la surface libre de la structure 305".

En référence à la figure 12D, on procède ensuite au dépôt ou au report d'une couche 301 de matériau ferroélectrique sur la surface ainsi dégagée de la structure 305".

On apprécie qu'un dépôt préalable d'une couche d'oxyde n'est pas nécessaire, du fait de la qualité de la surface 310.

Selon une variante, le métal, au lieu d'être déposé sur la surface libre de la structure 305' ou sur la surface libre de la structure 305", est implanté à travers l'une des surfaces libres, soit celle de la structure 305', soit celle de la structure 305".

On peut par exemple implanter des particules de cuivre ou d'or avec par exemple une énergie de l'ordre de 10 keV et une dose de à 5.10¹⁵ atomes/cm²_{.}

Un traitement thermique adapté permet ensuite aux espèces implantées de migrer vers les dislocations.

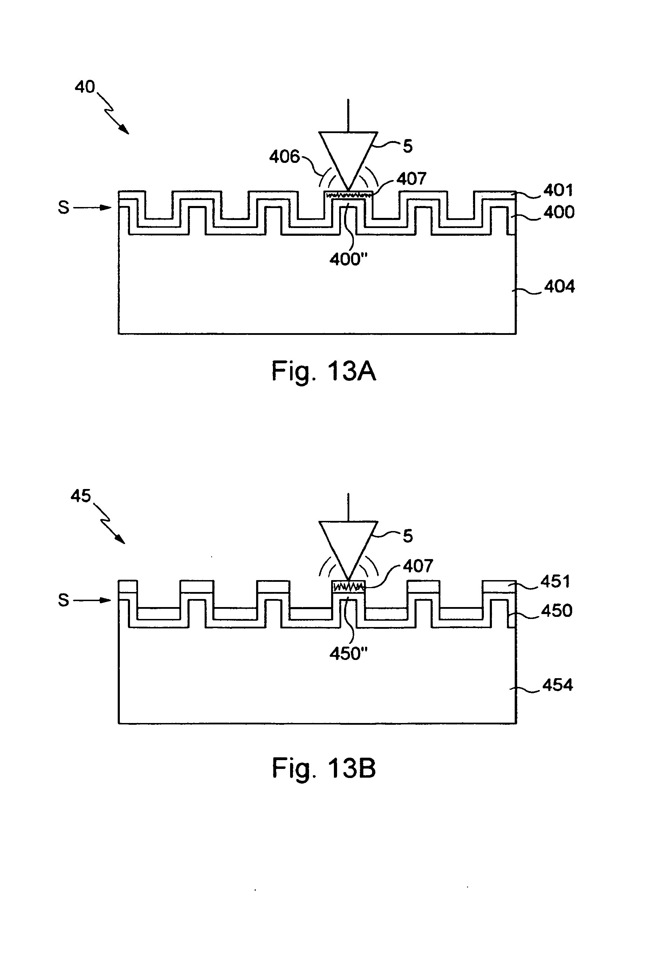

Selon un quatrième mode de réalisation d'un support de stockage de données, dont deux variantes sont représentées en figure 13A et 13B, celui-ci comprend un substrat incluant une surface nanostructurée S comme décrit dans le document EP 1 803 683 (ou FR 2 895 391).

En référence à la figure 13A, un substrat 404 en silicium comporte une surface nanostructurée S qui présente des creux et des saillies, autour d'une surface moyenne.

La différence de hauteur entre le fond des creux et le haut des saillies est par exemple de 5 à 10 nm en moyenne.. Elle est précisément ajustée.

Une couche métallique 400 recouvre la surface nanostructurée S. La couche métallique 400 est continue, mais selon des variantes, elle est discontinue, trouée, toutes ses parties étant néanmoins connectées entre elles autour de trous.

De plus la couche métallique 400 possède une forte affinité pour le substrat 404, et est en contact de celui-ci sur toute la surface nanostructurée, à la fois au fond des creux de la nanostructure, en haut des saillies de celle-ci et le long des côtés des saillies.

La couche métallique 400 a de plus une épaisseur sensiblement constante, et sa surface opposée au substrat 404 reproduit précisément la nanostructure de la surface nanostructurée S. La surface de la couche métallique 400 opposée au substrat 404 présente par conséquent des creux et des saillies similaires aux creux et aux saillies de la surface nanostructurée du substrat 404.

Une couche ferroélectrique 401 de tantalate de lithium recouvre la couche métallique 400. La couche ferroélectrique 401 est ici continue. De plus, elle possède une forte affinité pour le métal de la couche métallique 400, et est en contact avec celui-ci à la fois au fond des creux et en haut des saillies de la couche métallique 400, ainsi que le long des côtés des saillies.

Comme précédemment avec d'autres supports de stockage de données, une pointe de microscope à champ proche 5 est positionnée au-dessus du support de stockage de données 40, ou au contact de celui-ci.

L'électrode présente, à la verticale de la pointe de microscope 5, une saillie 400".

Un champ électrique est appliqué entre la couche métallique et la pointe de microscope à champ proche 5 ; les lignes de champ traversent une partie de la couche ferroélectrique 401. Les lignes de champ sont focalisées et s'écartent peu de l'espace situé entre la pointe de microscope 5 et la saillie métallique 400" lui faisant face.

Il en résulte qu'il se forme un nanodomaine 407 sur la couche ferroélectrique 401, et que celui-ci est de petite taille, sa taille maximale étant dépendante de la largeur du sommet de la saillie 400".

En référence à la figure 13B, une variante est présentée. Un support de stockage de données 45 comporte un substrat 454 qui comme présenté précédemment comporte une surface nanostructurée S. Une couche métallique 450 est présente sur la surface nanostructurée du substrat 454.

Un dépôt 451 de matériau ferroélectrique est présent à la surface de la couche métallique 450 ; il recouvre le fond des creux de la surface de la couche métallique 450, ainsi que le haut des saillies ; mais il ne recouvre pas le côté des saillies métalliques. Ce dépôt 451 de matériau ferroélectrique est donc discontinu.

Quand une pointe de microscope à champ proche 5 est approchée du support de stockage de données 45, en regard d'une saillie métallique 450", et qu'un champ électrique est appliqué entre l'électrode et la pointe de microscope 5, les lignes de champ traversent une zone de matériau ferroélectrique 451. Elles sont focalisées et s'écartent peu de l'espace situé entre la pointe de microscope 5 et la saillie métallique 450" lui faisant face.

Il en résulte qu'il se forme un nanodomaine 457 sur la couche ferroélectrique 401, et que celui-ci est de petite taille, sa taille maximale étant dépendante de la largeur du sommet de la saillie 450", ainsi que de la taille du morceau de matériau ferroélectrique déposé au sommet de la saillie métallique 450".

On précise que dans cette variante, le champ électrique appliqué entre la pointe de microscope 5 et l'électrode 450 peut être plus élevé que celui appliqué dans la précédente variante, représentée en figure 13A, ce qui peut permettre de se démarquer plus significativement de bruit de fond. Cela est rendu possible par la limitation matérielle ou spatiale du dépôt de matériau ferroélectrique au sommet de la saillie 400".

On va maintenant décrire un mode de réalisation d'un procédé de fabrication d'un dispositif de support de stockage de données 40.

Selon les enseignements du document FR 2 895 391, on prépare un substrat possédant une structuration de surface à l'échelle nanométrique, c'est-à-dire une surface présentant des zones en creux et des zones en saillie.

On dépose ensuite une quantité de métal à basse température (par exemple la température ambiante) pour obtenir une couche continue de métal. Pour cela, on s'assure que l'affinité du métal sur le substrat est suffisante.

La couche de métal alors obtenue est nanostructurée, du fait des saillies et des creux du substrat.

Par exemple, on procède au dépôt d'une couche de métal, ici du platine, sur la surface nanostructurée. Selon un mode de réalisation, la couche de métal déposée a une épaisseur typique de 25 nm, mais cette épaisseur peut varier, selon la profondeur de la structuration de surface initiale et l'aspect plus ou moins conformant du dépôt de la couche métallique.

En variante on aurait pu utiliser directement un substrat conducteur (par exemple en silicium dégénéré) pourvu d'une structuration de surface.

Puis on procède à un dépôt d'une couche ferroélectrique, ici constituée de tantalate de lithium, sur la couche de métal, de telle sorte que l'adhérence de la couche ferroélectrique sur le métal soit forte, et que la couche ferroélectrique suive les nanostructurations de la couche métallique, en les reproduisant à sa surface.

Selon un mode de réalisation la couche ferroélectrique déposée est relativement épaisse, vis-à-vis des nanostructurations, et elle reste continue.

Des zones choisies dans le volume de métal au sommet des nanostructurations forment des zones de stockage, qui suivent la structuration de surface.

En variante, la couche ferroélectrique est fine par rapport à l'amplitude de la nanostructuration. La couche ferroélectrique est alors discontinue, et trouée. Les zones de stockage sont alors séparées notamment par des discontinuités dans la couche ferroélectrique.

Un support de stockage de données selon les différents modes de réalisation tels que décrit ci-dessus peut être utilisé pour l'écriture et la lecture de données suivant le procédé qui va être décrit maintenant.

Plusieurs exemplaires physiques de support de stockage de données sont disponibles, et un même dispositif de lecture et d'écriture est utilisé avec ces différents exemplaires.

Une pointe de microscope à champ proche se déplace au-dessus d'une surface libre d'un exemplaire physique d'un support de stockage de données, au-dessus d'une couche ferroélectrique telle que décrite précédemment.

La position des zones de stockage est préalablement mémorisée dans une mémoire d'une unité de contrôle du dispositif de lecture et d'écriture, qui contrôle le déplacement de la pointe de microscope.

Selon un mode de réalisation, l'alignement de la pointe de microscope sur l'exemplaire physique de support de stockage est effectué à l'aide d'un système de mires.

L'alignement est en pratique effectué au moins une fois pour chaque exemplaire de support de données. Selon un mode de réalisation, il est effectué plusieurs fois, de manière espacée éventuellement régulièrement. Selon un mode de réalisation avantageux, on effectue de plus un alignement continu.

C'est ainsi qu'il peut être effectué plusieurs fois au cours de l'opération d'écriture ou de lecture à l'aide d'un même système de mires. Selon une autre variante, l'alignement est effectué plusieurs fois à l'aide de plusieurs systèmes de mires.

Selon un autre mode de réalisation, l'alignement est réalisé en mesurant continûment avec la pointe de microscope un signal local, qui selon une variante est une capacité, et selon une autre variante est un courant ou une tension, selon les techniques connues de microscopie à champ proche.

Quand la pointe de microscope s'approche de l'aplomb d'une zone de stockage de données, définie comme on a vu précédemment au moins par une densité de matériau conducteur entourée d'une zone non conductrice, le microscope à champ proche mesure un extremum local de signal. On effectue alors l'alignement par tâtonnement autour des positions mémorisées.

Si le signal mesuré est un courant, l'extremum est un maximum, et si le signal mesuré est une capacité, l'extremum est un minimum.

Le signal local est mesuré sous le seuil d'énergie nécessaire au changement de polarisation, de manière à ne pas modifier l'information stockée dans le nanodomaine.

Selon un mode de réalisation avantageux, l'alignement est réalisé en utilisant à la fois un système de mire, pour l'alignement initial et une mesure de signal local, pour un repositionnement régulier de la pointe de microscope au cours du déplacement de celle-ci, selon une technique de pistage (ou tracking en anglais).

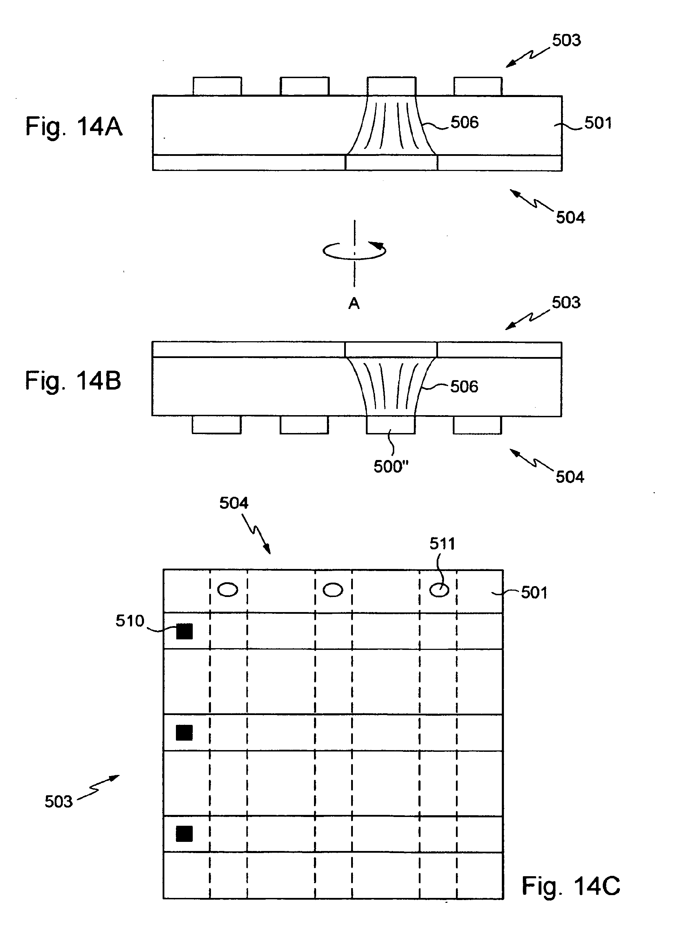

Selon un cinquième mode de réalisation d'un support de stockage de données, représenté en figures 14A, 14B et 14C, une couche ferroélectrique 501 est intercalée entre deux réseaux métalliques 503 et 504.

Le support de stockage de données est représenté sur les figures 14A et 14B en coupe, la vue de la figure 14B étant obtenue à partir de la vue de la figure 14A par rotation de 90° autour d'un axe A inclus dans le plan de la figure. La vue de la figure 14C est quant à elle une vue de dessus.

Chacun des réseaux 503 et 504 est formé d'un ensemble de pistes sensiblement parallèles les unes aux autres et électriquement indépendantes les unes des autres. La direction des pistes du réseau 503 est perpendiculaire à la direction des pistes du réseau 504.

Chaque piste du premier réseau 503 comprend une zone de contact 510 à une de ses extrémités. Chaque piste du deuxième réseau 504 comprend également une zone de contact 511 à une de ses extrémités. Cette zone de contact permet de polariser la piste en lui appliquant un potentiel électrostatique donné. Suivant une variante, la zone de contact est sur la piste, à distance des extrémités de celle-ci.

La polarisation d'une piste se fait par l'intermédiaire d'une pointe de microscope à champ proche, approchée de la zone de contact.

Selon une variante, chaque piste est polarisée par un système classique d'adressage.

Lorsqu'une première piste faisant partie du premier réseau et une deuxième piste faisant partie du second réseau sont polarisées à des potentiels électrostatiques différents, un champ électrique est formé entre une zone de la première piste centrée sur la zone de la première piste sur laquelle se projette orthogonalement la deuxième piste, et une zone de la deuxième piste centrée sur la zone de la deuxième piste sur laquelle se projette orthogonalement la première piste.

Les lignes de champ 506 du champ électrique ainsi formées traversent la couche ferroélectrique. Elles sont focalisées entre deux zones de petites tailles, ce qui permet d'obtenir un nanodomaine de petite taille, d'ordre de grandeur similaire à l'ordre de grandeur de la largeur des pistes du réseau 503 ou de la largeur des pistes du réseau 504.

Il se produit alors un phénomène d'écriture sur la couche ferroélectrique dans l'espace ainsi défini.

Ce mode de réalisation d'un support de stockage de données s'utilise en agissant sur la polarité des zones de contact 510 et 511 qui sont alignées en des positions prédéfinies.

Il permet donc d'obtenir une vitesse de lecture ou d'écriture plus grande par rapport à un dispositif incluant un seul réseau de pistes et nécessitant un balayage bidirectionnel.

Ce mode de réalisation permet également de limiter les problèmes d'alignement d'une pointe de microscope.

## Revendications

1. Support de stockage de données comportant :
■ une couche formant électrode (100' ; 203, 200' ; 300, 300' ; 400 ; 450 ; 504),
■ une couche en matériau sensible (101 ; 201 ; 301 ; 401 ; 451 ; 501) longeant ladite couche formant électrode, et dont le volume est adapté à être localement modifié entre deux états électriques sous l'action d'un champ électrique localisé,
• ce support admettant un plan de référence globalement parallèle à la couche en matériau sensible, destiné à être longé par au moins un élément (5) d'application d'un champ électrostatique en combinaison avec la couche formant électrode,
• **caractérisé en ce que** ce support comporte, parallèlement à ce plan de référence, une pluralité de portions conductrices (100" ; 200', 200" ; 300', 300"; 400" ; 450" ; 500") faisant partie de la couche formant électrode et séparées par au moins une zone électriquement isolante, ces portions électriquement conductrices ayant, dans au moins une direction parallèle au plan de référence une dimension au plus égale à 100 nm, certaines au moins des portions conductrices étant électriquement connectées entre elles, ces portions conductrices définissant au sein de la couche en matériau sensible des emplacements (107 ; 207 ; 307 ; 407 ; 506) d'écriture/lecture de données.

2. Support selon la revendication 1 **caractérisé en ce que** ladite dimension est au plus égale à 50 nm.

3. Support selon la revendication 1 ou la revendication 2 **caractérisé en ce que** chacune des portions conductrices de ladite pluralité est à une distance inférieure à 100 nm d'une portion conductrice voisine de ladite pluralité, mesurée parallèlement au plan de référence.

4. Support selon l'une des revendications 1 à 3 **caractérisé en ce que** la couche en matériau sensible (101 - 501) comprend un matériau ferroélectrique.

5. Support selon la revendication 4 **caractérisé en ce que** le matériau ferroélectrique est du tantalate de lithium LiTaO₃.

6. Support selon l'une des revendications 1 à 5 **caractérisé en ce qu'**il comporte en outre une couche d'oxyde (102 ; 204) entre un substrat porteur et la couche formant électrode.

7. Support selon l'une des revendications 1 à 6 **caractérisé en ce que** la couche formant électrode (100' ; 203, 200" ; 300, 300' ; 504) est plane et la couche en matériau sensible (101 ; 201 ; 301 ; 501) est plane et continue.

8. Support selon la revendication 7 **caractérisé en ce que** lesdites portions conductrices comprennent des zones de croisement (100" ; 300") de lignes d'un premier ensemble de lignes parallèles les unes aux autres avec des lignes d'un deuxième ensemble de lignes conductrices parallèles les unes aux autres, les lignes du deuxième ensemble rencontrant transversalement les lignes du premier ensemble, ces lignes assurant la connexion des dites portions conductrices entre elles, les lignes du premier et du deuxième ensembles de lignes étant coplanaires.

9. Support selon la revendication 8 **caractérisé en ce que** les lignes des premiers et seconds ensembles sont formés dans des dislocations à une interface (300) de collage entre deux structures en matériau monocristallin, selon au moins deux directions différentes, ces lignes assurant la connexion desdites portions conductrices entre elles.

10. Support selon la revendication 8 ou la revendication 9 **caractérisé en ce que** les lignes conductrices définissent des mailles rectangulaires ou carrées (fig 4A ; 4B ; 4C).

11. Support selon l'une des revendications 7 à 10 **caractérisé en ce que** les portions conductrices comprennent des plots (fig 8A ; 8B) venant en saillie vers la couche sensible à partir d'une couche sous-jacente (203) en matériau conducteur,

12. Support selon la revendication 11 **caractérisé en ce que** la couche sous-jacente (203) comprend des lignes conductrices se croisant les unes avec les autres.

13. Support selon la revendication 11 **caractérisé en ce que** la couche sous-jacente (203) est continue.

14. Support selon la revendication 7 **caractérisé en ce que** le plan de référence s'étend entre la couche en matériau sensible (501) et une pluralité de lignes (503) formant des électrodes situées à l'opposé de la couche formant électrode (504) par rapport à cette couche en matériau sensible.

15. Support selon l'une des revendications 1 à 6 **caractérisé en ce que** la couche formant électrode (400 ; 450) et la couche en matériau sensible (401 ; 451) sont chacune formées de portions, chaque portion de la couche formant électrode étant située à l'une ou l'autre de deux profondeurs par rapport au plan de référence, et chaque portion de la couche en matériau sensible longeant une portion de la couche formant électrode, ladite couche formant électrode étant à la surface d'un substrat.

16. Support selon la revendication 15 **caractérisé en ce que** les portions de la couche formant électrode à une faible profondeur (400" ; 450") constituent des sommets de plots en saillie par rapport à des portions de la couche formant électrode à une deuxième profondeur.

17. Support selon la revendication 15 **caractérisé en ce que** les portions de la couche formant électrode à une faible profondeur (400" ; 450") constituent une surface d'une grille en saillie par rapport à des portions de la couche formant électrode à une deuxième profondeur.

18. Procédé de fabrication d'un support de stockage de données conforme à l'une des revendications 1 à 17 selon lequel on forme une couche formant électrode (100' ; 203, 200' ; 300, 300') et une couche en matériau sensible (101 ; 201 ; 301), **caractérisé en ce qu'**on délimite par un matériau électriquement isolant (102 ; 202 ; 305") une pluralité de portions conductrices (100" ; 200', 200" ; 300', 300") dans la couche formant électrode.

19. Procédé selon la revendication 18 **caractérisé en ce qu'**on fabrique la couche formant électrode par une étape de collage de deux structures mono-cristallines (305' ; 305") en sorte de former à un interface de collage (I) entre les deux sous-couches mono-cristallines un entrecroisement de dislocations, ladite étape de collage étant suivie d'une étape de diffusion de matériau conducteur (300) au travers de l'une desdites sous-couches jusqu'à former des lignes conductrices (fig 11A ; 11B) dans lesdites dislocations.

20. Procédé selon la revendication 18 **caractérisé en ce qu'**on forme la couche formant électrode par dépôt d'une couche en matériau conducteur (100 ; 200) sur la couche en matériau sensible (101 ; 201) et qu'on délimite des portions conductrices (100" ; 200', 200") dans ladite couche en matériau conducteur par des opérations de gravure et de dépôt d'au moins le matériau électriquement isolant (102 ; 202), et on relie ensuite la couche formant électrode (100' ; 203, 200') à un substrat porteur (104 ; 205).

21. Procédé selon la revendication 20 **caractérisé en ce qu'**on réalise des portions de connexion connectant lesdites portions conductrices (100" ; 200', 200") au sein de ladite couche en matériau conducteur.

22. Procédé selon la revendication 20 **caractérisé en ce qu'**on réalise les portions conductrices sous forme de plots (200') de matériel conducteur isolés par gravure de ladite couche en matériau conducteur (200), dite première couche conductrice, et qu'on dépose sur les plots une deuxième couche conductrice (203) assurant la connexion entre lesdits plots de matériel conducteur.

23. Procédé selon la revendication 22 **caractérisé en ce que** la deuxième couche conductrice (203) est continue.

## Claims

1. Data storage medium including:
• an electrode layer (100'; 203, 200'; 300, 300'; 400; 450; 504),
• a sensitive material layer (101; 201; 301; 401; 451; 501) extending along said electrode layer, the volume whereof is adapted to be locally modified between two electrical states by the action of a localised electric field,
• this medium having a reference plane globally parallel to the sensitive material layer, intended to have pass along it at least one element (5) for application of an electrostatic field in combination with the electrode layer,
• **characterised in that** this medium includes, parallel to this reference plane, a plurality of conductive portions (100"; 200', 200"; 300', 300"; 400"; 450"; 500") forming part of the electrode layer and separated by at least one electrically insulative zone, these electrically conductive portions having, in at least one direction parallel to the reference plane, a dimension at most equal to 100 nm, at least some of the conductive portions being electrically interconnected, these conductive portions defining data write/read locations (107; 207; 307; 407; 506) within the sensitive material layer.

2. Medium according to claim 1, **characterised in that** said dimension is at most equal to 50 nm.

3. Medium according to claim 1 or claim 2, **characterised in that** each of the conductive portions of said plurality is at a distance of less than 100 nm from an adjacent conductive portion of said plurality, measured parallel to the reference plane.

4. Medium according to any one of claims 1 to 3, **characterised in that** the sensitive material layer (101-501) comprises a ferro-electric material.

5. Medium according to claim 5, **characterised in that** the ferro-electric material is lithium tantalate LiTaO₃.

6. Medium according to any one of claims 1 to 5, **characterised in that** it further includes an oxide layer (102; 204) between a carrier substrate and the electrode layer.

7. Medium according to any one of claims 1 to 6, **characterised in that** the electrode layer (100'; 203, 200"; 300, 300'; 504) is plane and the sensitive material layer (101; 201; 301; 501) is plane and continuous.

8. Medium according to claim 7, **characterised in that** said conductive portions comprise areas of crossover (100"; 300") of lines of a first set of parallel lines with lines of a second set of parallel conductive lines, the lines of the second set meeting the lines of the first set transversely, these lines interconnecting said conductive portions, the lines of the first and second sets of lines being coplanar.

9. Medium according to claim 8, **characterised in that** the lines of the first and second sets are formed in dislocations at a bonding interface (300) between two monocrystalline material structures in at least two different directions, these lines interconnecting said conductive portions.

10. Medium according to claim 8 or claim 9, **characterised in that** the conductive lines define rectangular or square meshes (fig 4A; 4B; 4C).

11. Medium according to any one of claims 7 to 10, **characterised in that** the conductive portions comprise lands (fig 8A; 8B) projecting toward the sensitive layer from an underlying conductive material layer (203).

12. Medium according to claim 11, **characterised in that** the underlying layer (203) comprises conductive lines crossing each other.

13. Medium according to claim 11, **characterised in that** the underlying layer (203) is continuous.

14. Medium according to claim 7, **characterised in that** the reference plane lies between the sensitive material layer (501) and a plurality of lines (503) forming electrodes on the opposite side of the electrode layer (504) to this sensitive material layer.

15. Medium according to any one of claims 1 to 6, **characterised in that** the electrode layer (400; 450) and the sensitive material layer (401; 451) are each formed of portions, each portion of the electrode layer being situated at one or the other of two depths relative to the reference plane, and each portion of the sensitive material layer extending along a portion of the electrode layer, said electrode layer being on the surface of a substrate.

16. Medium according to claim 15, **characterised in that** the portions of the electrode layer at a shallow depth (400"; 450") constitute tops of lands projecting relative to portions of the electrode layer at a second depth.

17. Medium according to claim 15, **characterised in that** the portions of the electrode layer at a shallow depth (400"; 450") constitute a surface of a grid projecting relative to portions of the electrode layer at a second depth.

18. Method of fabricating a data storage medium according to any one of claims 1 to 17, wherein there are formed an electrode layer (100'; 203, 200'; 300, 300') and a sensitive material layer (101; 201; 301), **characterised in that** a plurality of conductive portions (100"; 200', 200"; 300', 300") are delimited in the electrode layer by an electrically insulative material (102; 202; 305").

19. Method according to claim 18, **characterised in that** the electrode layer is fabricated by a step of bonding two monocrystalline structures (305'; 305") to form at bonding interface (I) between the two monocrystalline sublayers a crossover of dislocations, said bonding step being followed by a step of diffusion of conductive material (300) through one of said sublayers to form conductive lines (fig 11A; 11B) in said dislocations.

20. Method according to claim 18, **characterised in that** the electrode layer is formed by depositing a conductive material layer (100; 200) on the sensitive material layer (101; 201) and conductive portions (100"; 200', 200") are delimited in said conductive material layer by operations of etching and depositing at least the electrically insulative material (102; 202), and the electrode layer (100'; 203, 201') is then bonded to a carrier substrate (104; 205).

21. Method according to claim 20, **characterised in that** connecting portions connecting said conductive portions (100"; 200', 200") are formed within said conductive material layer.

22. Method according to claim 20, **characterised in that** the conductive portions take the form of conductive material lands (200') isolated by etching said conductive material layer (200), culled the first conductive layer, and there is deposited on the lands a second conductive layer (203) interconnecting said conductive material lands.

23. Method according to claim 22, **characterised in that** the second conductive layer (203) is continuous.

## Patentansprüche

1. Datenspeicherträger, umfassend:
- eine eine Elektrode bildende Schicht (100'; 203, 200'; 300, 300'; 400, 450; 504),
- eine Schicht aus empfindlichem Material (101; 201; 301; 401; 451; 501), die sich entlang der eine Elektrode bildenden Schicht erstreckt und deren Volumen derart ausgebildet ist, dass es stellenweise unter der Einwirkung eines örtlichen elektrischen Feldes zwischen zwei elektrischen Zuständen veränderlich ist,
- wobei der Träger eine Bezugsebene im Wesentlichen parallel zu der Schicht aus empfindlichem Material zulässt, die dafür bestimmt ist, mittels mindestens eines Elements (5) zur Anlage eines elektrostatischen Feldes in Kombination mit der eine Elektrode bildenden Schicht abgefahren zu werden,
- **dadurch gekennzeichnet, dass** der Träger parallel zu der Bezugsebene eine Mehrzahl leitende Abschnitte (100"; 200', 200"; 300', 300"; 400"; 450"; 500") umfasst, die zu der eine Elektrode bildenden Schicht gehören und mittels mindestens einer elektrisch isolierenden Zone getrennt sind, wobei diese elektrisch leitenden Abschnitte in zumindest einer Richtung parallel zu der Bezugsebene eine Abmessung von höchstens 100 nm aufweisen, wobei zumindest bestimmte der leitenden Abschnitte untereinander elektrisch verbunden sind, wobei diese leitenden Abschnitte innerhalb der Schicht aus empfindlichem Material Schreib-/Lesestellen (107; 207; 307; 407; 506) für Daten definieren.

2. Träger nach Anspruch 1,
**dadurch gekennzeichnet, dass** die Abmessung höchstens 50 nm beträgt.

3. Träger nach Anspruch 1 oder Anspruch 2,
**dadurch gekennzeichnet, dass** sich jeder der leitenden Abschnitte der Mehrzahl in einem Abstand von weniger als 100 nm von einem leitenden Abschnitt benachbart zu der Mehrzahl, gemessen parallel zu der Bezugsebene, befindet.

4. Träger nach einem der Ansprüche 1 bis 3,
**dadurch gekennzeichnet, dass** die Schicht aus empfindlichem Material (101 - 501) ein ferroelektrisches Material umfasst.

5. Träger nach Anspruch 4,
**dadurch gekennzeichnet, dass** das ferroelektrische Material Lithiumtantalat LiTaO₃ ist.

6. Träger nach einem der Ansprüche 1 bis 5,
**dadurch gekennzeichnet, dass** er außerdem eine Oxidschicht (102; 204) zwischen einem Trägersubstrat und der eine Elektrode bildenden Schicht umfasst.

7. Träger nach einem der Ansprüche 1 bis 6,
**dadurch gekennzeichnet, dass** die eine Elektrode bildende Schicht (100'; 203, 200"; 300, 300'; 504) eben ist und die Schicht aus empfindlichem Material (101; 201; 301; 501) eben und durchgehend ist.

8. Träger nach Anspruch 7,
**dadurch gekennzeichnet, dass** die leitenden Abschnitte Kreuzungszonen (100"; 300") aus Linien einer ersten Menge parallel zueinander liegender Linien mit Linien einer zweiten Menge parallel zueinander liegender, leitfähiger Linien umfassen, wobei die Linien der zweiten Menge die Linien der ersten Menge transversal treffen, wobei die Linien die Verbindung der leitenden Abschnitte untereinander sicherstellen, wobei die Linien der ersten und der zweiten Menge Linien koplanar sind.

9. Träger nach Anspruch 8,
**dadurch gekennzeichnet, dass** die Linien der ersten und zweiten Menge in Dislozierungen an einer Klebungsgrenzfläche (300) zwischen zwei Strukturen aus monokristallinem Material gemäß zumindest zweier unterschiedlicher Richtungen gebildet sind, wobei diese Linien die Verbindung dieser leitenden Abschnitte untereinander sicherstellen.

10. Träger nach Anspruch 8 oder Anspruch 9,
**dadurch gekennzeichnet, dass** die leitenden Linien rechteckige oder quadratische Maschen definieren (Fig. 4A; 4B; 4C).

11. Träger nach einem der Ansprüche 7 bis 10,
**dadurch gekennzeichnet, dass** die leitenden Abschnitte Kontakte (Fig. 8A; 8B) umfassen, die in Richtung der empfindlichen Schicht ausgehend von einer darunter liegenden Schicht (203) aus Leitermaterial vorstehen.

12. Träger nach Anspruch 11,
**dadurch gekennzeichnet, dass** die darunter liegende Schicht (203) leitende Linien umfasst, die einander kreuzen.

13. Träger nach Anspruch 11,
**dadurch gekennzeichnet, dass** die darunter liegende Schicht (203) durchgehend ist.

14. Träger nach Anspruch 7,
**dadurch gekennzeichnet, dass** sich die Bezugsebene zwischen der Schicht aus empfindlichem Material (501) und einer Mehrzahl Elektroden bildender Linien (503) erstreckt, welche der eine Elektrode bildenden Schicht (504) mit Bezug auf die Schicht aus empfindlichem Material gegenüber liegen.

15. Träger nach einem der Ansprüche 1 bis 6,
**dadurch gekennzeichnet, dass** die eine Elektrode bildende Schicht (400; 405) und die Schicht aus empfindlichem Material (401; 451) jeweils aus Abschnitten gebildet sind, wobei jeder Abschnitt der eine Elektrode bildenden Schicht in der einen oder der anderen von zwei Tiefen mit Bezug auf die Bezugsebene gelegen ist, und jeder Abschnitt der Schicht aus empfindlichem Material entlang eines Abschnitts der eine Elektrode bildenden Schicht verläuft, wobei sich die eine Elektrode bildende Schicht an der Oberfläche eines Substrats befindet.

16. Träger nach Anspruch 15,
**dadurch gekennzeichnet, dass** die Abschnitte der eine Elektrode bildenden Schicht mit einer geringen Tiefe (400"; 450") Kontaktscheitel bilden, die mit Bezug auf Abschnitte der eine Elektrode bildenden Schicht mit einer zweiten Tiefe vorstehen.

17. Träger nach Anspruch 15,
**dadurch gekennzeichnet, dass** die Abschnitte der eine Elektrode bildenden Schicht mit einer geringen Tiefe (400"; 450") eine Oberfläche eines Gitters bilden, das mit Bezug auf die Abschnitte der eine Elektrode bildenden Schicht mit einer zweiten Tiefe vorsteht.

18. Herstellungsverfahren für einen Datenspeicherträger nach einem der Ansprüche 1 bis 17,
nach welchem eine eine Elektrode bildende Schicht (100'; 203, 200'; 300, 300') und eine Schicht aus empfindlichem Material (101; 201; 301) gebildet werden,
**dadurch gekennzeichnet, dass** durch ein elektrisch isolierendes Material (102; 202; 305") eine Mehrzahl leitende Abschnitte (100"; 200', 200"; 300', 300") in der eine Elektrode bildenden Schicht begrenzt wird.

19. Verfahren nach Anspruch 18,
**dadurch gekennzeichnet, dass** die eine Elektrode bildende Schicht durch einen Klebungsschritt zweier monokristalliner Strukturen (305'; 305") gebildet wird derart, dass an einer Klebungsgrenzfläche (I) zwischen den zwei monokristallinen Teilschichten ein Dislozierungskreuzungsmuster gebildet wird, wobei dem Klebeschritt ein Diffusionsschritt mit Leitermaterial (300) durch eine der Teilschichten folgt, bis in den Dislozierungen leitende Linien (Fig. 11A; 11B) gebildet sind.

20. Verfahren nach Anspruch 18,
**dadurch gekennzeichnet, dass** die eine Elektrode bildende Schicht durch Abscheidung einer Schicht aus Leitermaterial (100; 200) auf die Schicht aus empfindlichem Material (101; 201) gebildet wird, und dass die leitenden Abschnitte (100"; 200', 200") in der Schicht aus Leitermaterial durch Ätz- und Abscheidungsvorgänge von zumindest dem elektrisch isolierenden Material (102; 202) begrenzt werden, und anschließen die eine Elektrode bildende Schicht (100; 203, 200') an ein Trägersubstrat (104; 205) gebondet wird.

21. Verfahren nach Anspruch 20,
**dadurch gekennzeichnet, dass** Verbindungsabschnitte, die die leitenden Abschnitte (100"; 200', 200") verbinden, innerhalb der Schicht aus Leitermaterial realisiert werden.

22. Verfahren nach Anspruch 20,
**dadurch gekennzeichnet, dass** die leitenden Abschnitte in der Form von isolierten Kontakten (200') aus Leitermaterial durch Ätzen der Schicht aus Leitermaterial (200), die erste leitende Schicht genannt wird, realisiert werden, und dass auf den Kontakten eine zweite leitende Schicht (203) abgeschieden wird, die die Verbindung zwischen diesen Kontakten aus Leitermaterial sicherstellt.

23. Verfahren nach Anspruch 22,
**dadurch gekennzeichnet, dass** die zweite leitende Schicht (203) durchgehend ist.
